# EUROPÄISCHE PATENTANMELDUNG

(11) **EP 1 256 305 A2**
(43) Veröffentlichungstag der Anmeldung: **13.11.2002**
(21) Anmeldenummer: 02002076.4
(22) Anmeldetag: 10.02.2002
(51) Int. Cl.: A47K 10/04, F16B 7/00, F16B 12/40

(54) **Verbindungselement**

(30) Priorität: 07.05.2001 DE 20107695 U
(71) Anmelder: WENKO-WENSELAAR GMBH & CO. KG, D-40721 Hilden (DE)
(72) Erfinder: Köllner, Hanns-Joachim, 40625 Düsseldorf (DE)
(74) Vertreter: Kreuzkamp, Markus

(57) **Zusammenfassung**

Die Erfindung betrifft ein Verbindungselement (2) zum Verbinden von wenigstens zwei Rohren (10) und/oder zum Verschließen wenigstens eines Rohrendes. Hierbei ist das Verbindungselement (2) über eine Nut-Feder-Verbindung (4, 6) oder dergleichen mit dem jeweiligen Rohr (10) verbindbar ist, wobei vorzugsweise die Feder (4) an dem Verbindungselement und die Nut (6) am Rohr (10) vorgesehen ist und vorzugsweise das Rohr (10) zumindest im Bereich der Verbindung mit dem Verbindungselement (2) zumindest abschnittsweise hohl ausgebildet ist und daß das Verbindungselement (2) in das Rohr (10) einschiebbar ist.

## Beschreibung

Die Erfindung betrifft ein Verbindungselement zum Verbinden von wenigstens zwei Rohren und/oder zum Verschließen wenigstens eines Rohrendes.

Derartige Verbindungselemente sind bekannt. Meistens werden diese in die Rohrenden eingesteckt. Ist die äußere Größe des Verbindungselementes im Vergleich zum inneren Durchmesser eines Rohres zu groß, gibt es Schwierigkeiten beim Zusammensetzen des Verbindungselementes mit den jeweiligen Rohrenden. Ist das Verbindungselement dagegen zu klein im Vergleich zum inneren Durchmesser der Rohrenden, läßt es sich zwar einfach zusammensetzen, es besteht jedoch die Gefahr, daß die Verbindungselemente und die Rohrenden auseinander rutschen.

Der Erfindung liegt die Aufgabe zugrunde, die genannten Nachteile zu vermeiden.

Die Erfindung wird dadurch gelöst, daß das Verbindungselement über eine Nut-Feder-Verbindung oder dergleichen mit dem jeweiligen Rohr verbindbar ist, wobei vorzugsweise die Feder an dem Verbindungselement und die Nut am Rohr vorgesehen ist und vorzugsweise das Rohr zumindest im Bereich der Verbindung mit dem Verbindungselement zumindest abschnittsweise hohl ausgebildet ist und daß das Verbindungselement in das Rohr einschiebbar ist.

Hierbei wird das Verbindungselement in ein vorzugsweise hohl ausgebildetes Rohrende eingeschoben. Es empfiehlt sich, daß das Verbindungselement von seinen äußeren Dimensionen etwas kleiner ausgebildet ist als der innere Durchmesser des vorzugsweise als Hohlzylinder ausgebildeten Rohres. Damit läßt sich das Verbindungselement ohne Schwierigkeiten in das jeweilige Rohrende einschieben. Eine feste Verbindung wird durch die Nut-Feder-Verbindung erreicht, so daß es wirkungsvoll vermieden wird, daß das Verbindungselement aus dem jeweiligen Rohrende herausrutschen kann. Je nach Ausbildung der Nut-Feder-Verbindung besteht auch die Möglichkeit, daß das Verbindungselement aus den Rohrenden durch Lösen der Verbindung wieder entfernt werden kann. Gemäß der Erfindung ist vorzugsweise die Feder am Verbindungselement und die Nut am Rohr vorgesehen. Es ist jedoch auch gemäß der Erfindung möglich, daß dieses genau umgekehrt angeordnet ist.

Eine Weiterbildung der Erfindung sieht vor, daß die Feder am Verbindungselement zumindest annähernd rund oder eckig ausgebildet ist zum Zusammenwirken mit einer korrespondierenden Ausnehmung am Rohr, wobei vorzugsweise die Ausnehmung am Rohr geringfügig größer als die Feder am Verbindungselement ausgebildet ist.

Bei einer runden Feder bietet es sich an, daß in einem Rohr, das vorzugsweise als Hohlzylinder ausgebildet ist, in der Rohraußenwand eine kreisförmige Ausnehmung vorgesehen ist.

Zum Zusammenstecken des Verbindungselementes mit dem Rohr ist es dabei vorteilhaft, wenn die Ausnehmung am Rohr geringfügig größer als die Feder am Verbindungselement ausgebildet ist.

Eine Weiterbildung der Erfindung sieht vor, daß das Rohr eine von seiner Außenkante nach innen gerichtete Einbuchtung oder dergleichen aufweist, die mit einer am Verbindungselement vorgesehen taschenförmigen Ausnehmung zusammenwirkt, wobei vorzugsweise die äußere Begrenzung der Einbuchtung zumindest annähernd zylinderförmig ausgebildet ist.

Dadurch wird der Halt der Verbindung zwischen Verbindungselement und Rohr verstärkt und ein unbeabsichtigtes Verrutschen des Verbindungselementes gegenüber dem Rohr wird wirkungsvoll vermieden.

Selbstverständlich kann die äußere Begrenzung der Einbuchtung auch jede andere geometrische Form aufweisen. Vorteilhaft ist es hierbei nur, wenn die taschenförmige Ausnehmung zumindest in etwa die gleiche geometrische Form wie die äußere Begrenzung der Einbuchtung aufweist.

Bei einer Weiterbindung des Verbindungselementes kann vorgesehen sein, daß das Verbindungselement nicht aus einem Vollkörper besteht und vorzugsweise zumindest abschnittsweise nachgiebig ausbildbar ist, vorzugsweise in dem Bereich, der im zusammengesetzten Zustand mit einem Rohr mit diesem zusammenwirkt.

Hierdurch wird erreicht, daß beim Zusammensetzen des Verbindungselementes mit dem Rohr das Verbindungselement etwas nachgibt, so daß das Einsetzen erleichtert wird. Im zusammengesetzten Zustand des Verbindungselementes mit dem Rohr nimmt das Verbindungselement seine ursprüngliche Form wieder an, so daß ein unbeabsichtigtes Herausrutschen des Verbindungselementes aus dem Rohr vermieden wird.

Ein derartiges Verbindungselement läßt sich beispielsweise dadurch herstellen, daß das Verbindungselement im Spritzgußverfahren herstellbar ist.

Die Herstellung im Spritzgußverfahren hat zudem den Vorteil, daß die Herstellung eines derartigen Verbindungselementes relativ preisgünstig ist, so daß sich die Herstellungskosten enorm reduzieren.

Das Verbindungselement kann verschiedene Formen aufweisen. Beispielsweise kann es bogenförmig oder auch T-förmig ausgebildet sein.

Die äußere Form des Verbindungselementes sollte der jeweiligen Verwendung des Verbindungselementes im zusammengesetzten Zustand angepaßt sein. Beispielsweise zur Verbindung von zwei Rohren, die im wesentlichen einen rechten Winkel zwischen sich einschließen sollen, erweist sich ein Verbindungselement vorteilhaft, bei dem die beiden freien Endstücke zur Aufnahme von Rohren ebenfalls in etwa einen 90°-Winkel einschließen.

Bei der Verbindung von drei Rohren ist ein T-förmiges Verbindungselement vorteilhaft, weil dann drei freie Enden zur Aufnahme von Rohren vorgesehen sind.

Selbstverständlich ist jede weitere Ausgestaltung möglich. So kann das Verbindungselement beliebig viele freie Endstücke zur Aufnahme von Rohren aufweisen.

Eine genaue Positionierung des Verbindungselementes wird bei einer Weiterbildung der Erfindung dadurch erreicht, daß das Verbindungselement in dem seinem Ende abgewandten Bereich hinter der Feder eine Verdickung aufweist, wobei vorzugsweise die Verdickung das Verbindungselement zumindest abschnittsweise ringförmig umschließt und wobei vorzugsweise das Verbindungselement in das Rohr bis zur Verdickung einführbar ist und wobei insbesondere die äußere Begrenzung der Verdickung zumindest abschnittsweise einen größeren Durchmesser als der Innendurchmesser des Rohres aufweist.

Hierdurch wird ein zu weites Hineinrutschen des Verbindungselementes in das jeweilige Rohrende vermieden.

Ein unbeabsichtigtes Hineinrutschen des Verbindungselementes in das Rohrende beziehungsweise ein zu weites Hineinschieben kann dadurch vermieden werden, daß das Verbindungselement im zusammengesetzten Zustand mit dem Rohr in dem Bereich, der mit dem äußeren Ende des Rohres zusammenwirkt, eine Gummierung oder dergleichen aufweist.

Eine stabile Ausgestaltung des Verbindungselementes und gleichzeitig kostengünstige Herstellung hat sich gemäß der Erfindung dadurch erwiesen, daß das Verbindungselement aus Kunststoff, vorzugsweise aus Polypropylen, besteht.

Das Verbindungselement kann natürlich auch aus jedem anderen Material, beispielsweise aus Metall, bestehen.

Die Erfindung betrifft weiterhin ein Möbelteil mit zumindest zwei als Stecksystem ausgebildeten Rohren.

Hierbei ist gemäß der Erfindung vorgesehen, daß die Rohre im zusammengesetzten Zustand des Möbelteils durch ein Verbindungselement über eine Nut-Feder-Verbindung oder dergleichen verbunden sind, wobei vorzugsweise die Feder an dem Verbindungselement und die Nut am Rohr vorgesehen ist und vorzugsweise das Rohr zumindest im Bereich der Verbindung mit dem Verbindungselement zumindest abschnittsweise hohl ausgebildet ist und daß das Verbindungselement in die Rohre eingeschoben ist.

Das Verbindungselement kann dabei alle vorteilhaften Ausgestaltungen aufweisen, die zuvor beschrieben worden sind.

Das erfindungsgemäße Möbelteil kann als Handtuchhalter ausgebildet sein. Derartige Handtuchhalter sind bekannt. Hierbei sind auch Verbindungselemente zur Verbindung der einzelnen Rohre vorgesehen. Allerdings weisen diese eine Schraube auf, die im zusammengesetzten Zustand angezogen werden muß. Bei derartigen Verbindungselementen ist eine äußerst präzise Herstellung erforderlich, damit eine sichere Befestigung der Rohre untereinander gewährleistet ist. Dies bedeutet erhöhte Herstellungskosten. Zudem ist dann die Montage schwieriger.

Bei dem erfindungsgemäßen Verbindungselement können kleine Toleranzen ausgeglichen werden, so daß von daher schon nicht derartig hohe Anforderungen an die Herstellung gestellt werden.

Bei einer Weiterbildung des erfindungsgemäßen Möbelteils ist vorgesehen, daß der Handtuchhalter rohrförmige Quer-Rohrstangen zur Aufnahme von Handtüchern oder dergleichen aufweist und mit diesen über Verbindungselemente verbundene rohrförmige Längs-Rohrstangen.

Hierbei ist bei einer Weiterbildung vorgesehen, daß das Verbindungselement zwischen zwei Rohrstangen bogenförmig ausgebildet ist und vorzugsweise zumindest abschnittsweise die äußere Begrenzung des Handtuchhalters bildet.

Weiterhin ist es gemäß der Verbindung vorteilhaft, wenn das Verbindungselement zwischen drei Rohrstangen T-förmig ausgebildet ist.

Eine vorteilhafte Ausgestaltung des Möbelteils in Form eines Handtuchhalters sieht vor, daß der Handtuchhalter hakenförmige Befestigungsvorrichtungen zur Befestigung des Handtuchhalters an einer Duschtür oder dergleichen aufweist.

Hierbei kann der Handtuchhalter über eine Duschtür gehängt werden, ohne daß hierfür zusätzliche Befestigungsmittel oder gar eine Verschraubung notwendig sind.

Bei einer Weiterbildung ist vorgesehen, daß der Handtuchhalter wenigstens einen Abstandsfuß, vorzugsweise mit einem Saugnapf, zum Abstützen des Handtuchhalters gegenüber einer Tür oder dergleichen aufweist.

Dadurch liegen die Rohre, die zur Aufnahme von Handtüchern oder dergleichen vorgesehen sind, nicht unmittelbar an der Tür oder dergleichen auf, an der der Handtuchhalter befestigt ist, so daß ausreichend Platz besteht, die Handtücher über die Quer-Rohrstangen zu hängen und außerdem eine ausreichend Luftzirkulation zum Trocknen der Handtücher gewährleistet ist.

Die Erfindung wird nachstehend anhand von Ausführungsbeispielen näher erläutert.

Dabei zeigen:
- Figur 1:: Eine Seitenansicht eines erfindungsgemäßen Verbindungselementes,
- Figur 2:: eine weitere Ansicht des Verbindungselementes gemäß Figur 1,
- Figur 3:: eine andere Seitenansicht des Verbindungselementes gemäß der Figuren 1 und 2,
- Figur 4:: ein Rohrende zur Aufnahme eines Verbindungselementes,
- Figur 5:: eine perspektivische Darstellung eines Verbindungselementes zur Aufnahme eines Rohres gemäß Figur 4,
- Figur 6:: eine perspektivische Darstellung des Rohres gemäß Figur 4,
- Figur 7:: ein Verbindungselement , das T-förmig ausgebildet ist,
- Figur 8:: eine Seitenansicht des Verbindungselementes gemäß Figur 7,
- Figur 9:: eine weitere Ansicht des Verbindungselementes gemäß den Figuren 7 und 8,
- Figur 10:: eine perspektivische Darstellung des Verbindungselementes gemäß der Figuren 7 bis 9,
- Figur 11:: ein Möbelteil in Form eines Handtuchhalters,
- Figur 12:: eine andere Ausgestaltung des Handtuchhalters.

In den Figuren sind gleiche oder gleichwirkende Bauteile mit gleichen Bezugszeichen gekennzeichnet.

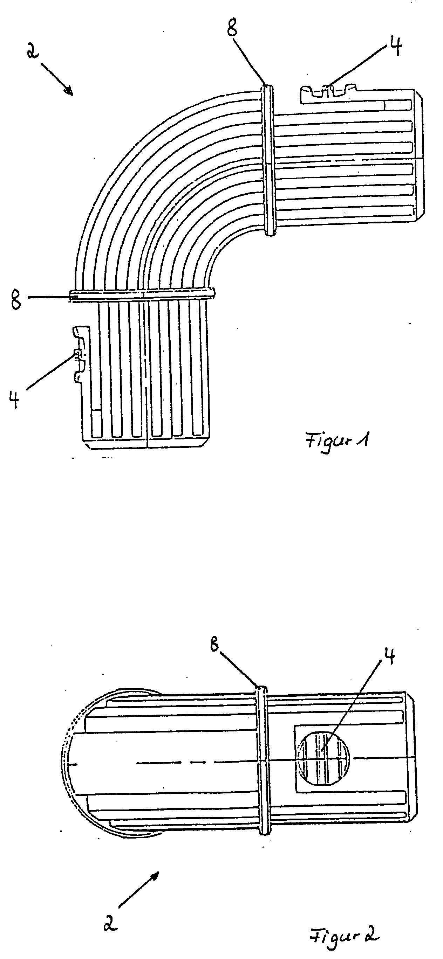

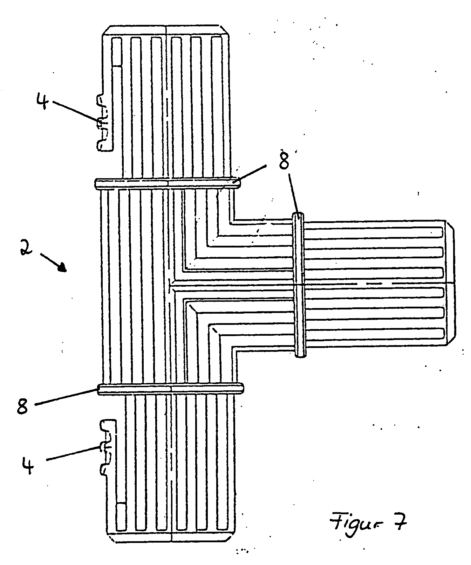

Figur 1 zeigt ein Verbindungselement (2) zur Verbindung zweier nicht dargestellter Rohre (10) miteinander. Das Verbindungselement (2) ist bogenförmig ausgestaltet, wobei es in seinen Endbereichen zum Einschieben in jeweils ein Hohlrohr vorgesehen ist. In dem Bereich des Verbindungselementes (2), der mit dem Rohr (10) zusammenwirkt, ist jeweils eine Feder (4) vorgesehen, die mit einer korrespondierenden Ausnehmung (6) (vergleiche Figur 6) eines Rohres (10) zusammenwirkt. Wird das Verbindungselement (2) in ein Rohr (10) eingeschoben, wird ein unbeabsichtigtes Herausrutschen durch die Nut-Feder-Verbindung (4, 6) verhindert.

Das Verbindungselement (2) weist in seinem Bereich, der hinter der Feder (4) vorgesehen ist, eine Verdickung (8) auf, die das Verbindungselement (2) ringförmig umschließt. Die ringförmige Verdickung (8) ist jeweils mit einem so großen Außendurchmesser vorgesehen, daß dieser größer ist, als der Innendurchmesser eines Rohres (10), in das das Verbindungselement (2) eingeschoben werden soll.

Das Verbindungselement (2) ist im Spritzgußverfahren hergestellt. Bedingt hierdurch ist das Verbindungselement (2) nicht als Vollkörper ausgebildet, sondern weist einige Bereiche mit Schlitzen auf, so daß das Verbindungselement (2) in einigen Bereichen beim Einschieben in ein Rohr (10) nachgeben kann. Dies hat den Vorteil, daß ein relativ fester Presssitz des Verbindungselementes (2) im Rohr (10) erreicht wird und zusätzlich das Einschieben des Verbindungselementes (2) in ein Rohr (10) erleichtert wird.

Figur 2 zeigt eine Draufsicht auf das Verbindungselement (2) gemäß Figur 1, wobei zu erkennen ist, daß die Feder (4) kreisförmig ausgebildet ist. Diese kreisförmige Feder (4) wirkt mit einer korrespondierenden Ausnehmung (6) (vergleiche Figur 6) eines Rohres (10) zusammen, wobei der Innendurchmesser der Ausnehmung (6) geringfügig größer als der Außendurchmesser der Feder (4) vorgesehen ist.

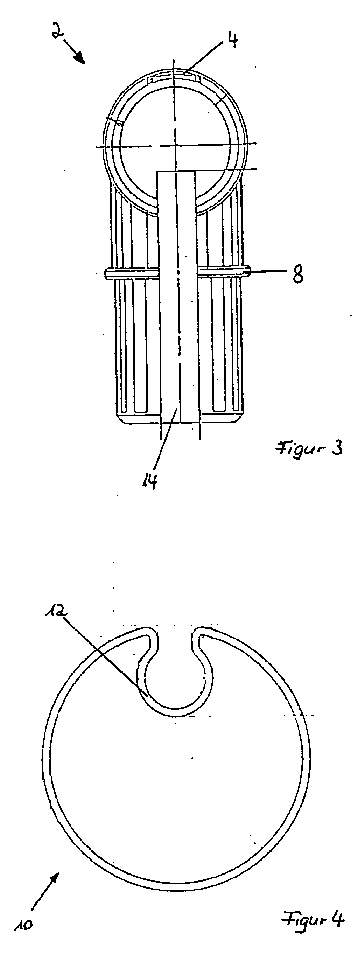

Figur 3 zeigt eine weitere Seitenansicht des Verbindungselementes (2). Hier ist sehr gut zu erkennen, daß das Verbindungselement (2) in den Bereichen, die in das Rohr (10) eingeführt werden, als Zylinder ausgebildet ist, das heißt, der inneren Form eines Rohres (10) angepaßt ist.

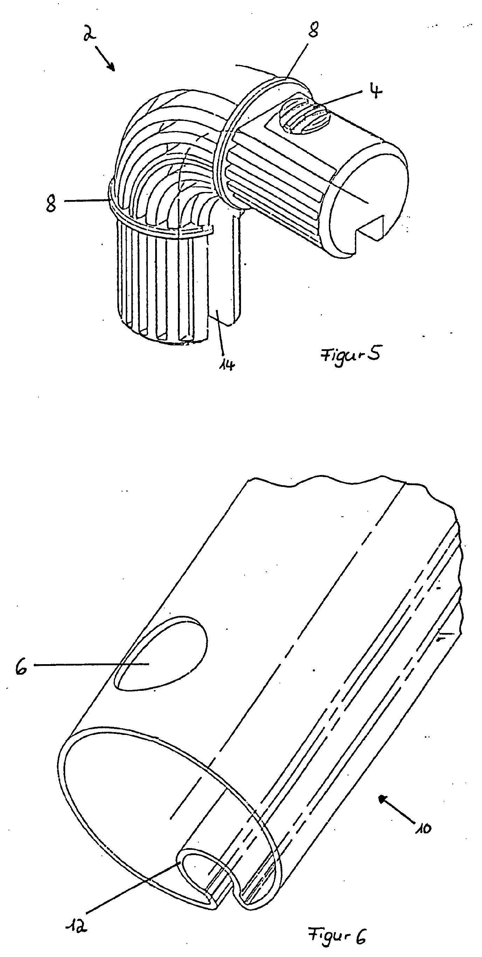

Figur 4 zeigt beispielhaft ein Rohr (10), in das ein derartiges Verbindungselement (2) eingesetzt werden kann. Dieses Rohr (10) ist zumindest in seinem Endbereich als Hohlzylinder ausgebildet. Eine Besonderheit dieses Rohres ist es, daß das Rohr (10) eine nach innen gerichtete Einbuchtung (12) aufweist, deren äußere Begrenzung zumindest annähernd zylinderförmig ausgebildet ist. Im zusammengesetzten Zustand des Verbindungselementes (2) mit dem Rohr (10) wirkt diese Einbuchtung (12) mit einer taschenförmigen Ausnehmung (14) des Verbindungselementes (2) zusammen. Diese taschenförmige Ausnehmung (14) läßt sich sehr gut in den Figuren 3 und 5 erkennen. Sie ist der äußeren Form der zylinderförmige Einbuchtung (12) angepaßt. Durch das Zusammenwirken dieser taschenförmigen Ausnehmung (14) mit der zylinderförmigen Einbuchtung (12) des Rohres (10) wird eine genaue Positionierung des Rohres (10) an dem Verbindungselement (2) gewährleistet, so daß ein unbeabsichtigtes Verrutschen ausgeschlossen werden kann.

Figur 5 zeigt eine perspektivische Darstellung des Verbindungselementes (2), das eine taschenförmige Ausnehmung (14) zur Aufnahme eines Rohres (10) gemäß Figur 4 aufweist. Diese taschenförmige Ausnehmung (14) erstreckt sich über den gesamten Innenbereich des Verbindungselementes (2).

Figur 6 zeigt eine perspektivische Darstellung des Rohres (10) gemäß Figur 4. Hier ist sehr gut die kreisförmige Ausnehmung in dem Rohr (10) zu erkennen, die mit der Feder (4) des Verbindungselementes (2) zusammenwirkt, so daß die Befestigung des Verbindungselementes (2) über diese Nut-Feder-Verbindung (4, 6) ermöglicht wird. Die nach innen gerichtete Einbuchtung (12) des Rohres (10) ist auf der gegenüberliegenden Rohrseite angeordnet.

Das Verbindungselement gemäß der Figuren 1, 2, 3 und 5 ist bogenförmig ausgebildet, so daß es zur Verbindung zweier Rohre in etwa einem 90°-Winkel dient.

Das Verbindungselement (2) gemäß Figur 7 ist von seiner Funktion genauso ausgebildet wie das Verbindungselement der zuvor genannten Figuren. Es zeichnet sich lediglich dadurch aus, daß seine äußere Form T-förmig ist, so daß es drei freie Enden zur Aufnahme von drei Rohren (10) aufweist.

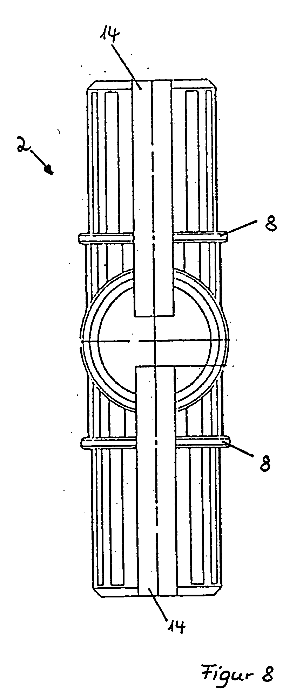

Figur 8 zeigt das gleiche Verbindungselement (2) gemäß Figur 7, wobei hier die Ansicht um 90° gedreht ist. Auch hier sind die taschenförmigen Ausnehmungen (14) zu erkennen, die zur Aufnahme der Einbuchtungen (12) des Rohres (10) vorgesehen sind.

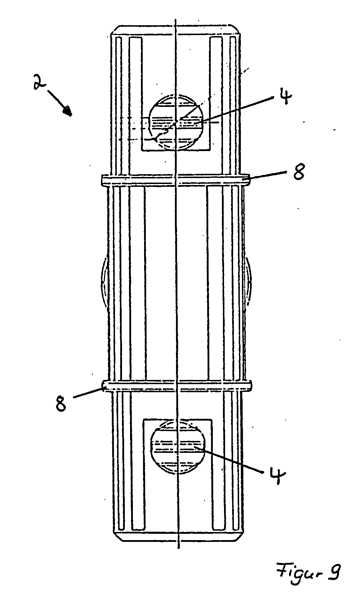

In Figur 9 ist das gleiche Verbindungselement (2) wie in den Figuren 7 und 8 dargestellt, wobei hier die Ansicht im Vergleich zur Figur 8 um 180° gedreht ist. Auch hier zeigt sich, daß an dem Verbindungselement (2) Federn (4) vorgesehen sind, die mit Ausnehmungen (6) eines Rohres (10) zusammenwirken. Das Rohr (10) wird über die Enden des Verbindungselementes (2) geschoben, bis es an der ringförmigen Verdickung (8) anstößt.

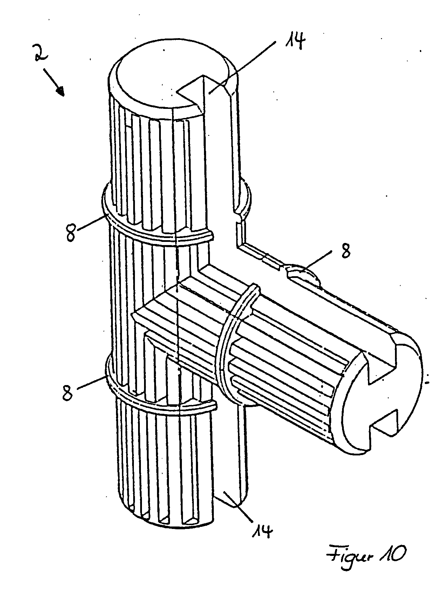

Figur 10 zeigt eine perspektivische Darstellung des Verbindungsgelementes (2) gemäß der Figuren 7 bis 9. Hier ist zu erkennen, daß die taschenförmigen Ausnehmungen (14) zur Aufnahme der zylinderförmigen Einbuchtungen (12) des Rohres (10) sich über die gesamte Innenseite des Verbindungselementes (2) erstrecken.

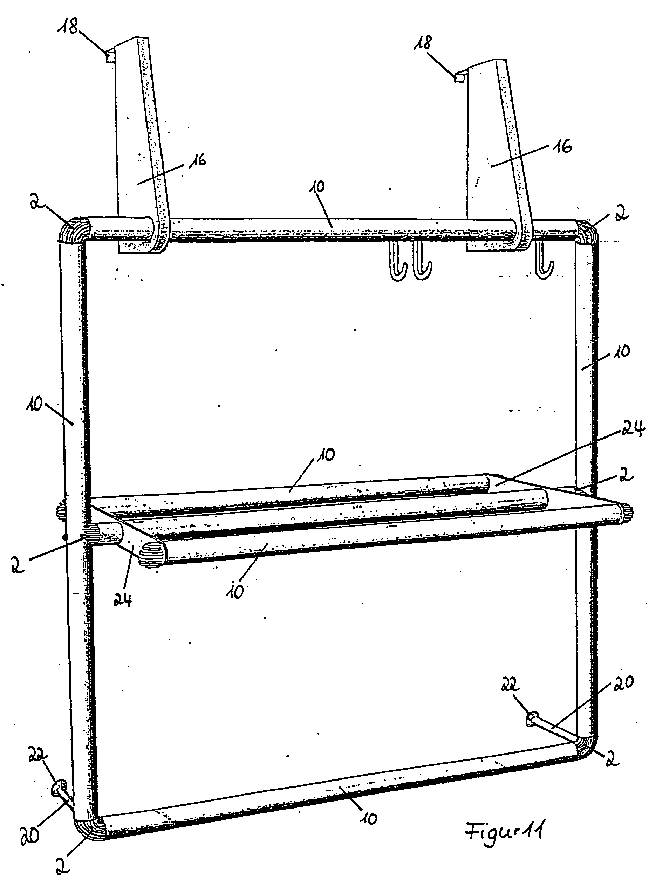

Figur 11 zeigt ein Möbelteil, das aus Rohren (10) besteht, die im Stecksystem zusammengesteckt sind. Die Verbindung erfolgt über bogenförmige Verbindungselemente (2) in den Eckbereichen. In dem mittleren Bereich, wo ein Handtuchhalter vorhanden ist, der aus drei Rohren (10) besteht, erfolgt die Verbindung der Rohre (10) mit den senkrechten Seitenrohren des Handtuchhalters über ein T-förmiges Verbindungselement (2).

In seinem oberen Bereich weist der Handtuchhalter hakenförmige Befestigungsvorrichtungen (16) auf, die an ihrem Ende kleine Haken (18) aufweisen, die über eine Tür oder Duschtür oder dergleichen gehängt werden. In seinem unteren Bereich weist der Handtuchhalter zwei Abstandsfüße (20) auf, die an ihren Enden jeweils einen Saugnapf (22) besitzen. Diese Abstandsfüße (20) sind zum Abstützen des Handtuchhalters gegenüber einer Tür vorgesehen, wobei ein Verrutschen des Handtuchhalters durch die Saugnäpfe (22) vermieden wird.

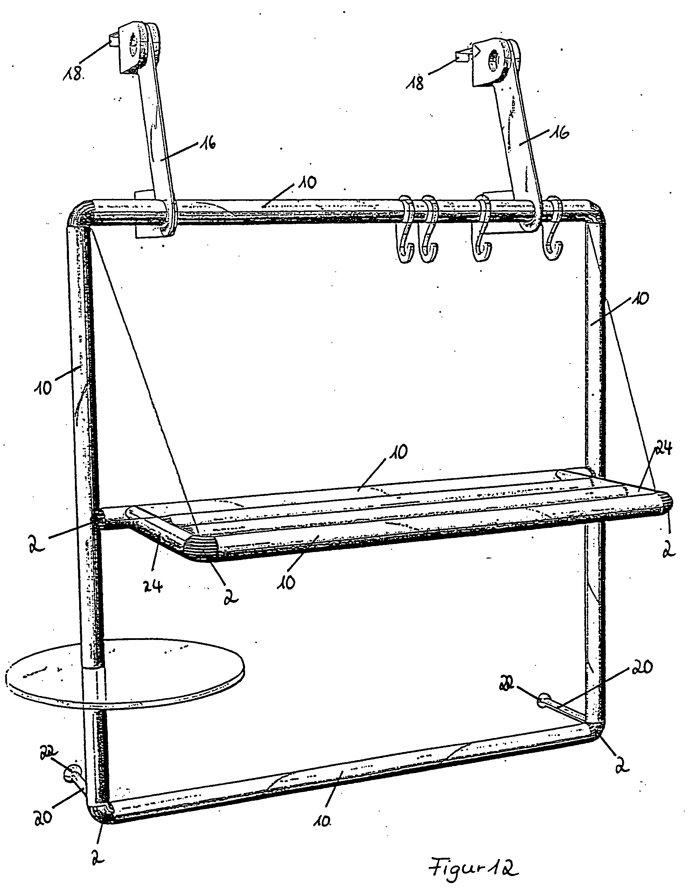

Der Handtuchhalter gemäß Figur 12 ist ähnlich ausgebildet, wie der Handtuchhalter der Figur 11. Lediglich seine Befestigungsvorrichtungen (16) sind etwas anders aufgebaut, wobei diese so ausgebildet sind, daß der obere Bereich schwenkbar zu den annähernd senkrechten Streben der Befestigungsvorrichtung (16) gestaltet ist.

Das eigentliche Aufnahmeelement für die Befestigung von Handtüchern oder dergleichen besteht aus vier parallel zueinander angeordneten Rohren (10), die über ein Außenrohr (24) miteinander verbunden sind. Dieses Außenrohr (24) ist über ein T-förmiges Verbindungselement (2) mit den senkrechten Rohren (10) des Handtuchhalters verbunden.

## Patentansprüche

1. Verbindungselement (2) zum Verbinden von wenigstens zwei Rohren (10) und/oder zum Verschließen wenigstens eines Rohrendes, **dadurch gekennzeichnet, daß** das Verbindungselement (2) über eine Nut-Feder-Verbindung (4, 6) oder dergleichen mit dem jeweiligen Rohr (10) verbindbar ist, wobei vorzugsweise die Feder (4) an dem Verbindungselement und die Nut (6) am Rohr (10) vorgesehen ist und vorzugsweise das Rohr (10) zumindest im Bereich der Verbindung mit dem Verbindungselement (2) zumindest abschnittsweise hohl ausgebildet ist und daß das Verbindungselement (2) in das Rohr (10) einschiebbar ist.

2. Verbindungselement nach Anspruch 1, **dadurch gekennzeichnet, daß** die Feder (4) am Verbindungselement (2) zumindest annähernd rund oder eckig ausgebildet ist zum Zusammenwirken mit einer korrespondierenden Ausnehmung (6) am Rohr (10), wobei vorzugsweise die Ausnehmung (6) am Rohr (10) geringfügig größer als die Feder (4) am Verbindungselement (2) ausgebildet ist.

3. Verbindungselement nach einem der vorangehenden Ansprüche, **dadurch gekennzeichnet, daß** das Rohr (10) eine von seiner Außenkante nach innen gerichtete Einbuchtung (12) oder dergleichen aufweist, die mit einer am Verbindungselement (2) vorgesehenen taschenförmigen Ausnehmung (14) zusammenwirkt, wobei vorzugsweise die äußere Begrenzung der Einbuchtung (12) zumindest annähernd zylinderförmig ausgebildet ist.

4. Verbindungselement nach einem der vorangehenden Ansprüche, **dadurch gekennzeichnet, daß** das Verbindungselement (2) nicht aus einem Vollkörper besteht und vorzugsweise zumindest abschnittsweise nachgiebig ausbildbar ist, vorzugsweise in dem Bereich, der im zusammengesetzten Zustand mit einem Rohr (10) mit diesem zusammenwirkt.

5. Verbindungselement nach einem der vorangehenden Ansprüche, **dadurch gekennzeichnet, daß** das Verbindungselement (2) im Spritzgußverfahren herstellbar ist.

6. Verbindungselement nach einem der vorangehenden Ansprüche, **dadurch gekennzeichnet, daß** das Verbindungselement (2) bogenförmig ausgebildet ist.

7. Verbindungselement nach einem der Ansprüche 1 bis 5, **dadurch gekennzeichnet, daß** die äußere Form des Verbindungselementes (2) T-förmig ist.

8. Verbindungselement nach einem der vorangehenden Ansprüche, **dadurch gekennzeichnet, daß** das Verbindungselement (2) in dem seinem Ende abgewandten Bereich hinter der Feder (4) eine Verdickung (8) aufweist, wobei vorzugsweise die Verdickung (8) das Verbindungselement (2) zumindest abschnittsweise ringförmig umschließt und wobei vorzugsweise das Verbindungselement (2) in das Rohr (10) bis zur Verdickung (8) einführbar ist und wobei insbesondere die äußere Begrenzung der Verdickung (8) zumindest abschnittsweise einen größeren Durchmesser als der Innendurchmesser des Rohres (10) aufweist.

9. Verbindungselement nach einem der Ansprüche 1 bis 7, **dadurch gekennzeichnet, daß** das Verbindungselement im zusammengesetzten Zustand mit dem Rohr in dem Bereich, der mit dem äußeren Ende des Rohres zusammenwirkt, eine Gummierung oder dergleichen aufweist.

10. Verbindungselement nach einem der vorangehenden Ansprüche, **dadurch gekennzeichnet, daß** das Verbindungselement (2) aus Kunststoff, vorzugsweise aus Polypropylen, besteht.

11. Möbelteil mit zumindest zwei als Stecksystem ausgebildeten Rohren, **dadurch gekennzeichnet, daß** die Rohre (10) im zusammengesetzten Zustand des Möbelteils durch ein Verbindungselement (2) über eine Nut-Feder-Verbindung (4, 6) oder dergleichen verbunden sind, wobei vorzugsweise die Feder (4) an dem Verbindungselement (2) und die Nut (6) am Rohr (10) vorgesehen ist und vorzugsweise das Rohr (10) zumindest im Bereich der Verbindung mit dem Verbindungselement (2) zumindest abschnittsweise hohl ausgebildet ist und daß das Verbindungselement (2) in die Rohre eingeschoben ist.

12. Möbelteil nach Anspruch 11, **dadurch gekennzeichnet, daß** die Feder (4) am Verbindungselement (2) zumindest annähernd rund ausgebildet ist zum Zusammenwirken mit einer korrespondierenden Ausnehmung (6) am Rohr (10), wobei vorzugsweise die Ausnehmung (6) am Rohr (10) geringfügig größer als die Feder (4) am Verbindungselement (2) ausgebildet ist.

13. Möbelteil nach einem der Ansprüche 11 oder 12, **dadurch gekennzeichnet, daß** das Rohr (10) eine von seiner Außenkante nach innen gerichtete Einbuchtung (12) oder dergleichen aufweist, die mit einer am Verbindungselement (2) vorgesehenen taschenförmigen Ausnehmung (14) zusammenwirkt, wobei vorzugsweise die äußere Begrenzung der Einbuchtung (12) zumindest annähernd zylinderförmig ausgebildet ist.

14. Möbelteil nach einem der Ansprüche 11 bis 13, **dadurch gekennzeichnet, daß** das Verbindungselement (2) nicht aus einem Vollkörper besteht und vorzugsweise zumindest abschnittsweise nachgiebig ausbildbar ist, vorzugsweise in dem Bereich, der im zusammengesetzten Zustand mit einem Rohr (10) mit diesem zusammenwirkt.

15. Möbelteil nach einem der Ansprüche 11 bis 14, **dadurch gekennzeichnet, daß** das Verbindungselement (2) im Spritzgußverfahren herstellbar ist.

16. Möbelteil nach einem der Ansprüche 11 bis 15, **dadurch gekennzeichnet, daß** das Verbindungselement (2) bogenförmig ausgebildet ist.

17. Möbelteil nach einem der Ansprüche 11 bis 15, **dadurch gekennzeichnet, daß** die äußere Form des Verbindungselementes (2) T-förmig ist.

18. Möbelteil nach einem der Ansprüche 11 bis 17, **dadurch gekennzeichnet, daß** das Verbindungselement (2) in dem seinem Ende abgewandten Bereich hinter der Feder (4) eine Verdickung (8) aufweist, wobei vorzugsweise die Verdickung (8) das Verbindungselement (2) zumindest abschnittsweise ringförmig umschließt und wobei weiterhin vorzugsweise das Verbindungselement (2) in das Rohr (10) bis zur Verdickung (8) einführbar ist und wobei insbesondere die äußere Begrenzung der Verdickung (8) zumindest abschnittsweise einen größeren Durchmesser als der Innendurchmesser des Rohres (10) aufweist.

19. Möbelteil nach einem der Ansprüche 11 bis 17, **dadurch gekennzeichnet, daß** das Verbindungselement im zusammengesetzten Zustand mit dem Rohr in dem Bereich, der mit dem äußeren Ende des Rohres zusammenwirkt, eine Gummierung oder dergleichen aufweist.

20. Möbelteil nach einem der Ansprüche 11 bis 19, **dadurch gekennzeichnet, daß** das Verbindungselement (2) aus Polypropylen besteht.

21. Möbelteil nach einem der Ansprüche 11 bis 20, **dadurch gekennzeichnet, daß** das Möbelteil als Handtuchhalter ausgebildet ist, wobei vorzugsweise der Handtuchhalter rohrförmige Quer-Rohrstangen (10) zur Aufnahme von Handtüchern oder dergleichen aufweist und mit diesen über Verbindungselemente (2) verbundene rohrförmige Längs-Rohrstangen (10) und wobei weiterhin vorzugsweise das Verbindungselement (2) zwischen zwei Rohrstangen bogenförmig ausgebildet ist und vorzugsweise zumindest abschnittsweise die äußere Begrenzung des Handtuchhalters bildet und wobei weiterhin vorzugsweise das Verbindungselement (2) zwischen drei Rohrstangen (10) T-förmig ausgebildet ist.

22. Möbelteil nach Anspruch 21, **dadurch gekennzeichnet, daß** der Handtuchhalter hakenförmige Befestigungsvorrichtungen (16, 18) zur Befestigung des Handtuchhalters an einer Duschtür oder dergleichen aufweist und wobei vorzugsweise der Handtuchhalter wenigstens einen Abstandsfuß (20), vorzugsweise mit einem Saugnapf (22), zum Abstützen des Handtuchhalters gegenüber einer Tür oder dergleichen aufweist.
